# EUROPEAN PATENT APPLICATION

(11) **EP 1 752 209 A1**
(43) Date of publication of application: **14.02.2007**
(21) Application number: 05107446.6
(22) Date of filing: 12.08.2005
(51) Int. Cl.: B01J 2/00, B01J 8/00, B01J 19/00, B65G 53/12, B65G 53/52, B65G 69/14

(54) **Method and device for dividing granules**

(71) Applicant: Ferring International Center S.A., 1007 Lausanne (CH)
(72) Inventor: Halskov, Søren, 2830, Virum (DK)
(74) Representative: Poulsen, Niels Jakob

(57) **Abstract**

A method for dividing the granules of a starting granulate, a granulate and an apparatus for processing a starting granulate is provided.

## Description

The present invention relates to a method for dividing granules of a starting granulate resulting in a discharge granulate of granules with reduced mean size, a granulate obtained by the method and an apparatus for dividing the granules.

### Background of the invention

Obtaining solid material of a particular size is a problem that is dealt with in a wide range of technical fields spanning from the detergent over plastics to the cereal industry. In some applications the size of the obtained solid material has a high impact on the processing and the applicability thereof. Especially in the pharmaceutical industry there is a need for solid materials of defined size distributions in order to repeatedly obtain uniform products fulfilling national regulations. Furthermore in some applications it is desired to obtain granules of reduced size in order to avoid further breakdown, facilitate dissolution etc.

Several methods for reducing the size of materials are known both within the pharmaceutical industry and in other technical fields. Many prior art methods, e.g. DE 101 25 566, are directed to milling/grinding of powdery particles into particles of magnitudes of microns in order to facilitate improved agglomeration/granulation of the powdery particles. Size reduction of larger particles, i.e. granules; have traditionally been accomplished by milling using e.g. the Quadro-Mill (produced by the company Quadro). However, in the prior art means alternative to milling/grinding for size reduction of larger entities such as granules has not been the object of intensive research.

It is therefore the object of the invention to provide an alternative improved means for size reduction of granules fulfilling some or all of the needs outlined.

### Summary of the Invention

Thus, in a first aspect the invention provides a method for dividing the granules of a starting granulate resulting in a discharge granulate of granules with reduced mean size, said method comprising the steps of (i) feeding said starting granulate into a processing chamber; (ii) accelerating said starting granulate by means of a fluid flow; and (iii) decelerating the granules of said starting granulate against at least one impact face.

The method of the invention is particularly useful for preparation of uniform granules of reduced size. The method of the invention is very simple and cost efficient resulting in uniformly high stable granules with high resistance to further breakdown. Because they are resistant to further breakdown, the granules obtained from the method of the invention are suitable for further processing such as loading and/or coating with predictable non-varying amounts of loading and/or coating agent. This makes the method of the invention particularly suitable for processing granules in the pharmaceutical industry where there is a heavy demand for reproducibility and accurate specification of ingredient contents.

Depending on the line of production, the starting granulate may in a preferred embodiment be obtained from a fluid-bed operation. WO 2004/093884 describes how such a granulate may be obtained. After extrusion and fluid bed drying, a process according to the present invention may replace Step 5, p. 16, of Example 1 of WO 2004/093884.

In another preferred embodiment the starting granulate is essentially dry i.e. a prefabricated granulate that needs to be processed. Thus, the method of the invention is very flexible and can be used in various process lines; i.e. from being the only unit operation to constituting one out of several.

In a development of the method the granulate is processed in a mill, such as a conical screen mill (a Quadro-mill), a tooth disc mill, a flake crusher mill, or an air-classifying mill. Milling may precede or follow application of the present process. In this development the invention provides for a further means of reducing the size and making the granules more uniform than is obtainable by the traditional mechanical means.

In a further development of the method according to the invention the degree of acceleration of the starting granulate is adjustable. This provides for applying the method of the invention to various mechanical strengths, forms and sizes of starting granulates. There is thus no need for changing parts of the apparatus in order to adapt to different granulate sizes, the fluid flow supplied is simply adjusted. In preferred embodiments the fluid flow is an air flow and in further preferred embodiments the air flow is compressed air.

In a second aspect of the invention, granules obtained from the method of the invention are provided, which granules have a reduced particle size. These granules are superior to the prior art in several ways. First of all they are less susceptible to further uncontrollable division in subsequent processes. This ensures a stable granulate for which it is possible to obtain a standardized end product in the further processing steps. Preferably the granules of the invention are uniform, this ensures a more homogenous end product, which is a critical factor particularly in the pharmaceutical industry.

In a third aspect of the invention is provided a granulate made up of essentially circular-cylindrical rod-shaped granules where at least 70% (w/w), more specifically at least 80%, of the granules have an L/D < 4, preferably an L/D < 3 and most preferred an L/D < 2. Granulates comprising granules of those specific dimensions are particularly resistant to further uncontrolled breakdown.

In a fourth aspect of the invention, an apparatus for dividing the granules of a starting granulate resulting in a discharge granulate of granules with reduced mean size distribution. This provides for easier, more predictable and thus reproducible subsequent processing, such as coating. The apparatus comprises an elongated chamber with a longitudinal axis; a fluid acceleration means; a starting granulate supply means; a discharge granulate collecting storage; and a number of granulate impact faces disposed within said processing chamber; said processing chamber comprising: a fluid inlet communicating with said fluid acceleration means; a starting granulate inlet communicating with said starting granulate supply means; and a discharge granulate outlet communicating with said granulate collecting storage. The fluid inlet is in the form of a tube entering said processing chamber from one end of said chamber, said tube preferably being disposed substantially coaxially within said chamber, the mouth of said tube being disposed between said starting granulate inlet and said discharge granulate outlet seen in the longitudinal direction of the processing chamber.

### Summary of the drawings

The invention will be described in detail in the following by means of examples of embodiments with reference to the schematic drawing, in which:
Fig. 1 is a sectional view of an embodiment of an apparatus according to the invention, the impact faces of the apparatus being shown in a detailed view;
Fig. 2a shows the magnified detail of the first embodiment of the impact faces of Fig. 1 in a perspective view;
Fig. 2b is a perspective view of a second embodiment of the impact faces according to the invention;
Fig. 2c is a perspective view of a third embodiment of the impact faces according to the invention;
Fig. 2d is a perspective view of a third embodiment of the impact faces according to the invention;
Fig. 3 is a flow diagram illustrating a first example of a method according to the invention;
Fig. 4a shows the apparatus of Fig. 1 carrying out the method according to Fig. 3, the figure showing the travelling path of granulate through the apparatus;
Fig. 4b is a detailed view of the granulate of Fig. 4a before and after (starting and discharge granulate, respectively) the method carried out in Fig. 3;
Fig. 5 is a flow diagram illustrating a second example of a method according to the invention;
Fig. 6 is a perspective view of an alternative embodiment of an apparatus according to the invention;
Fig. 7 is a cross-sectional view of a detail of the apparatus shown in Fig. 6;
Fig. 8 is a cross-sectional view of another detail of the apparatus shown in Fig. 6;
Fig. 9 is a cross-sectional view corresponding to Fig. 8 of a further embodiment of the impact faces;
Fig. 10 shows the particle size distribution represented by the lengths of granules after processing in a fluid bed.
Fig. 11 shows the particle size distribution represented by the lengths of granules after processing in a mill and subsequent sieving; and
Fig. 12 shows the particle size distribution represented by the lengths of granules after processing according to the present invention.

### Detailed description of the invention

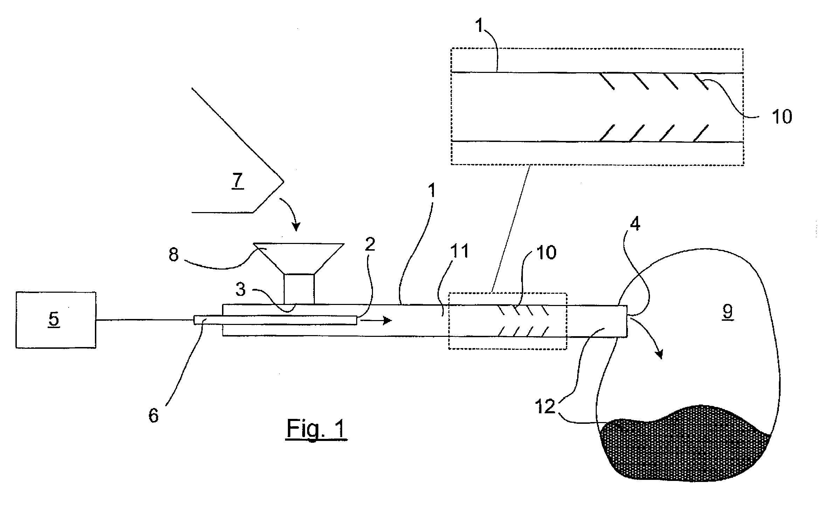

Fig. 1 shows an embodiment of an apparatus according to the invention. The apparatus comprises an elongated processing chamber in the form of a circular-cylindrical tube 1 with an inlet 2 for fluid such as air, a starting granulate inlet 3 and a discharge granulate outlet 4. The fluid inlet 2 is positioned between the starting granulate inlet 3 and the discharge granulate outlet 4 in the longitudinal direction of the processing chamber 1. The processing chamber may be of any other suitable shape, such as non-cylindrical, e.g. tapering, or polygonal, e.g. rectangular, pentagonal or octagonal. It may further be bended, e.g. wave-shaped or corrugated.

The fluid inlet 2 is communicating with a fluid acceleration means in the form of a compressed fluid supply 5 comprising means for adjusting the level of fluid compression. The fluid inlet 2 and the compressed fluid supply 5 communicate through tube 6, the tube 6 being coaxial with the longitudinal axis of the processing chamber 1. The starting granulate inlet 3 is communicating with a starting granulate supply 7, the starting granulate in the embodiment shown being poured by means of gravity through a funnel 8 of the starting granulate inlet 3. The starting granulate supply 7 may comprise weighing means for dosing the starting granulate. The discharge granulate outlet 4 communicates with a discharge granulate collecting storage in the form of a storage bag 9. The inner peripheral edges of a hole in the bag 9 are fixed around the outer periphery of the processing chamber 1.

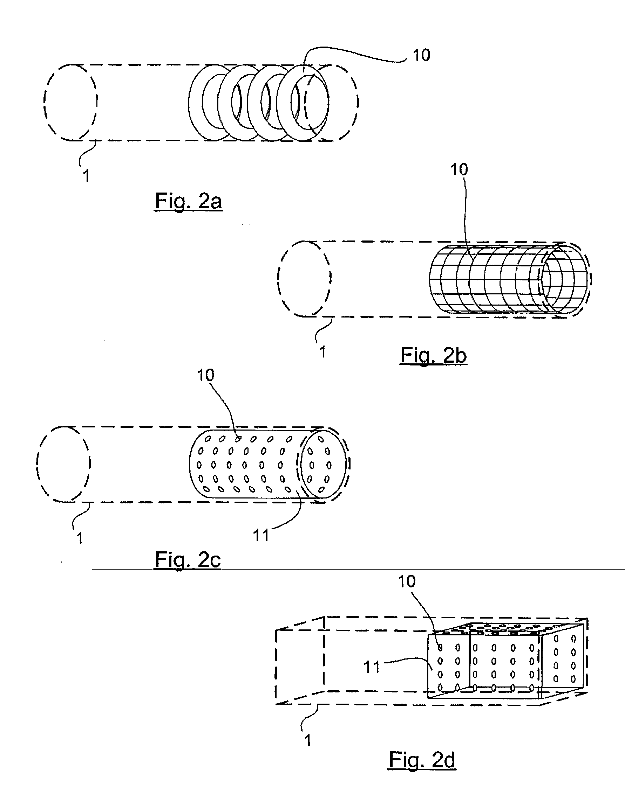

A number of granulate impact faces 10, each in the form of a hollow frustum of a cone tapered in the flow direction of the granulate, are disposed periodically in the longitudinal direction of the processing chamber 1 on the inner circumference of the chamber 1. The granulate impact faces 10 of this embodiment are shown in greater detail in Fig. 2a. In this embodiment, the angle α of the tapering with respect to the flow direction is approximately 60°; the angle α may, however, be of any other suitable value, such as 50° or 70°, depending on the circumstances.

Fig. 2b to 2d show perspective views of alternative embodiments of granulate impact faces 10 according to the invention. In Fig. 2a the impact faces 10 are embodied by means of a tube 11 of wire mesh abutting the internal surfaces of the processing chamber 1. Here, the impact faces 10 are faces of the wires of the mesh. Correspondingly, in the tube 11 of punched plate in the embodiment of Fig. 2c, the impact faces 10 are in the form of faces of the holes of the tube 11. Fig. 2d shows an alternative to Fig. 2c, the processing chamber 1 and tube 11 being in the form of a rectangle instead of a circular cylinder.

In any of the embodiments of Fig. 2a to 2d, the granulate impact faces 10 may advantageously be an integral part of the processing chamber 1. Further, size, position and angle of the granulate impact faces 10 with respect to the flow direction may advantageously be adjustable relative to different starting granulates or in order to accommodate different requirements to the dimensions of the discharge granulate.

In the embodiment of FIG. 1 the discharge granulate collecting storage is in the form of a bag. Granulate suitable for a sachet are described in e.g. WO 03/032952 and WO 2004/093884.

The apparatus according to the invention may comprise parts additional to the ones shown such as a discharge granulate sorting means, which may be a sieve.

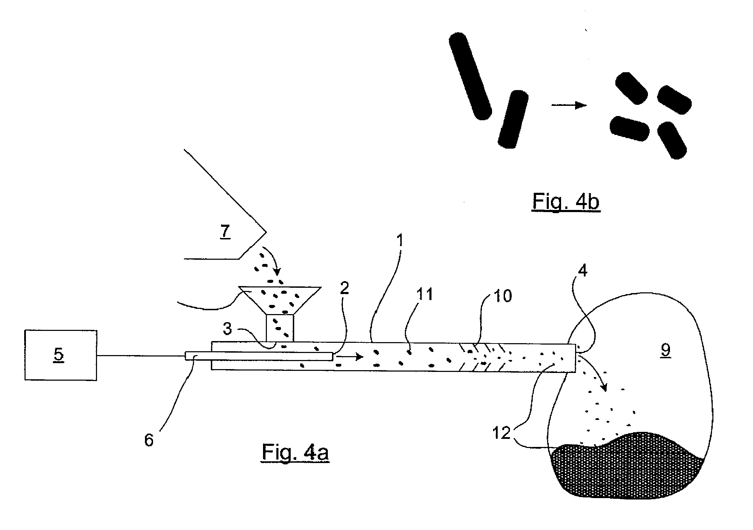

The discharge granulate shown to the right in fig. 4b are in the form of essentially cylindrical rod-shaped granules. Preferably, at least 70% (w/w), more specifically at least 80%, of the granules have an L/D < 4, more preferably an L/D < 3 and most preferred an L/D < 2.

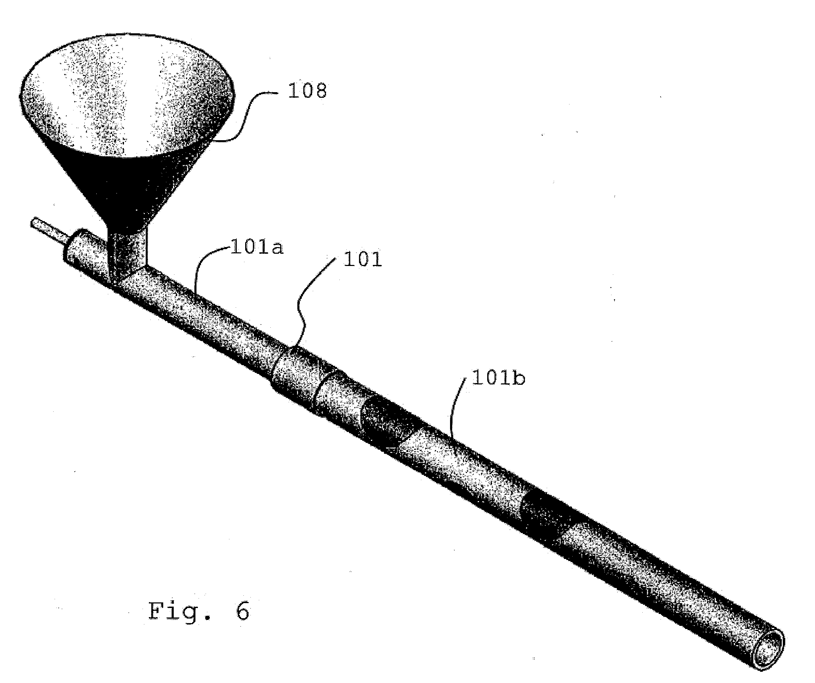

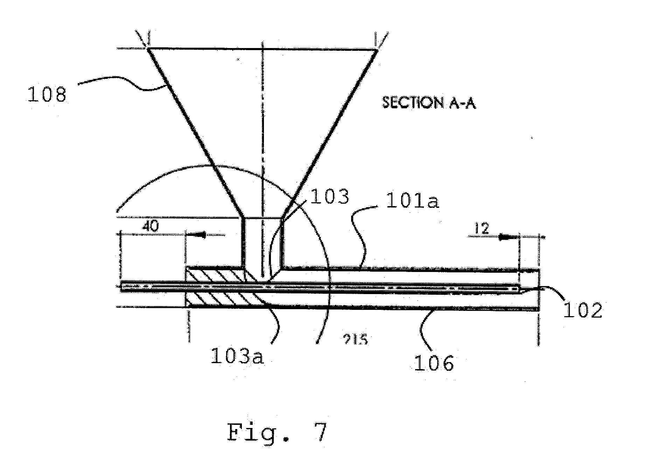

In the alternative embodiment of Figs. 6 to 8, elements having the same or analogous function as corresponding elements in the embodiments of Figs. 1-5 are denoted by the same reference numerals to which 100 has been added.

As may be seen the processing chamber 101 is composed by two parts, a first or funnel part 101a to which the funnel 108 is connected, and a second part 101b comprising the granulate impact faces. The parts 101a and 101b are connected with each other in any suitable manner, e.g. by welding or a screw connection.

The first part 101 surrounds, as in the previously described embodiment, the tube 6 for the passage of air or any other suitable fluid to the air inlet 102. At the granulate inlet 103, a rounded face 103a is formed.

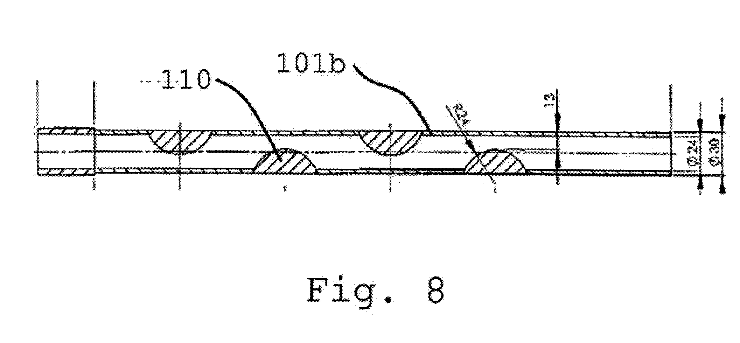

The granulate impact faces 110, shown most clearly in Fig. 8, are designed as part-cylindrical elements connected with the second part 101b of the processing chamber 101. To that end the wall of the second part 101b is formed with a plurality of apertures having a suitable distribution along the length of the second part 101b. The part-cylindrical elements are subsequently inserted into these apertures and connected with the second part 101b in any suitable manner to form the impact faces 110. In addition to the ease of manufacture obtainable by this embodiment, it is possible to optimize the choice of material in the second part 101b and the impact faces 110, respectively.

In principle, the second part 101b of the processing chamber 101 may be designed in any suitable manner and combined with the first or funnel part 101a. For instance, the impact faces may be designed as in any of the embodiments of Fig. 2, or in any other suitable manner.

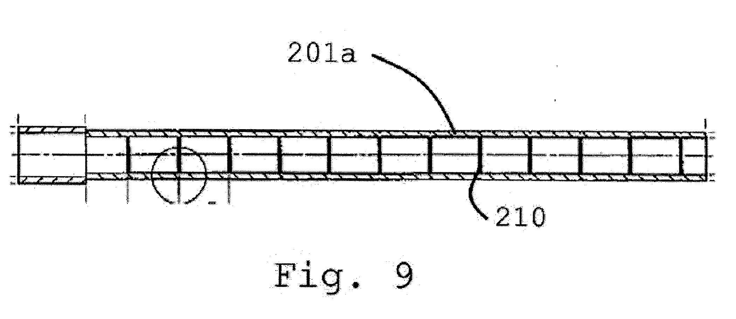

In the embodiment of Fig. 9 a further embodiment of such impact faces are shown. In this embodiment, elements having the same or analogous function as corresponding elements in the embodiment of Figs. 6-8 are denoted by the same reference numerals to which 100 has been added. The impact faces 210 of the second part 201b are formed as constrictions arranged substantially perpendicularly to the wall of the second part 201b.

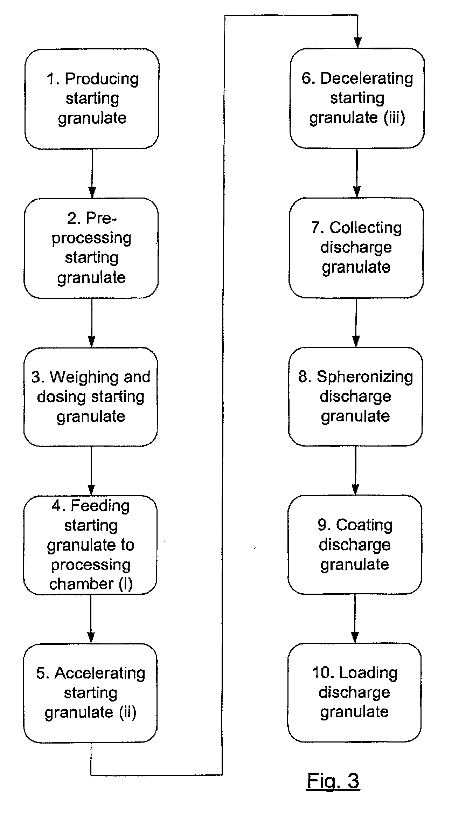

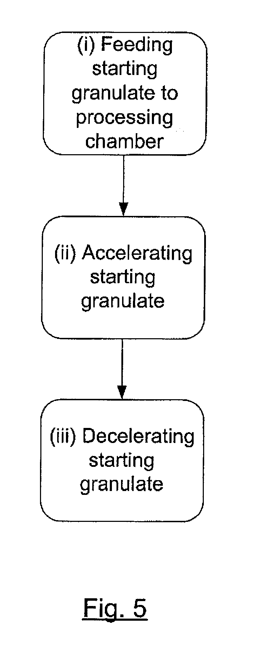

Fig. 3 shows a flow diagram of an example of a method according to the invention, Fig. 4a illustrates the steps carried out in the method of Fig. 3 in the apparatus of Fig. 1, and Fig. 4b is a detailed view of the granules of Fig. 4a, illustrating the starting product and the end product of the method carried out in Fig. 3. Fig. 5 shows a second example of the method according to the invention, the method only including steps (i) to (iii) of claim 1.

The method of Fig. 3 comprises steps 1 to 10, the steps 4 to 6 corresponding to (i) to (iii) of claim 1 and steps 1 to 3 and 7 to 10 being steps that may optionally be added to the method as required.

In step 1 the starting granulate is produced. This may be accomplished by any means known to a person skilled in the art, e.g. by means of a fluid-bed. The granulate may similarly be obtained through extrusion. The starting granulate may be produced immediately before feeding it to the processing chamber or it may be any prefabricated granulate.

In general the granulate may be provided in any state i.e. substantially dry or suspended in a fluid e.g. a liquid. Preferably the granulate is substantially dry.

According to the invention the starting granulate may be in any shape. Preferably, the granules of the starting granulate are rod shaped with an L/D ≥ 4 and a diameter of 0.2 mm or above, more preferred 0.9 mm or above; wherein L is the length and D is the diameter of the granules. These preferred dimensions of the starting granules may be obtained from the granules as such or through a further pre-processing step (step 2 of figure 3) such as using a mechanical dividing means e.g. milling or sieving. Thus, the pre-processing may be carried out in a mill, such as but not limited to a conical screen mill (a Quadro-mill), a tooth disc mill, a flake crusher mill, or an air-classifying mill. In another embodiment the granulate may be processed in a mill after being fed to the processing chamber. The further milling/sieving step may thus be introduced before and/or after the granulate has been fed to the apparatus of the invention.

The starting granulate may be any material that is able to form granulates of granules. As used herein the term "granule" means the smallest entity of a solid. The term "granulate" in the context of the present invention means an aggregation or clustering etc. of granules into a larger entity. In other words the granulate comprises the granules.

The granules according to the invention may be any solid e.g. an excipient such as a carrier, a supporting/carrier material, an active pharmaceutical ingredient or any mixture of the above. In a preferred embodiment of the invention the granulate comprises a pharmaceutically acceptable excipient and an active pharmaceutical ingredient.

In preferred embodiments the pharmaceutically acceptable excipient may be polyvinyl pyrrolidones (PVP). The active pharmaceutical ingredient may be an antiinflammatory agent and a particularly preferred antiinflammatory agent is mesalazin or derivatives thereof.

Before feeding the starting granulates to the processing chamber of the apparatus of the invention the granulate may further be weighed. The granulate may be fed to the processing chamber automatically using a conveyer belt or any other means. Alternatively it may be fed using gravity, for instance simply by pouring the granulate into the processing chamber e.g. through a funnel.

The accelerating step 4 of figure 3 and (i) of figure 5 of may be accomplished using any fluid. Preferably the fluid is air. In another preferred embodiment the air is compressed air. Depending of the granulate to be accelerated, the air to be used may be varied. For instance, if the granulate/granules is/are labile and susceptible to adverse degradation/conversion by atmospheric air or pure oxygen the air supply used may be inert gases such as nitrogen gas. Alternatively the fluid may be a liquid that is inert in respect of the granulate/granules. The choice of fluid in order to overcome adverse reactions is within the skill of the art.

The degree of the acceleration of the granulate (step 5 of figure 3 and step (ii) of figure 5) is in a preferred aspect of the method adjustable. This provides for the applicability of the inventive method to granules of various sizes. In general it applies that the smaller the granules the higher the acceleration of the granulate is needed. The person skilled in the art will without undue burden be able to adjust the acceleration of the granulate in order to obtain the desired size distribution of the granules constituting said granulate.

The degree of acceleration may in one preferred aspect of the invention be obtained by using an adjustable compressed air flow.

The accelerated granulate is decelerated using impact faces. The impact faces may be embodied as described in greater details above.

The decelerated granules (the discharge material) have according to invention a particle size distribution, which is more confined than the particle size distribution of the starting material. By "confined" in context of the present invention is meant that the size distribution of the discharge granulate has a narrower size distribution than the starting material. In other terms this may be illustrated by a lower margin of error/maximum error of estimate (E) when assessing the size distribution of the discharge material statistically. E is defined as E=Z _{α/2}* (σ/√n) wherein Z_{α/2} is the critical value, σ is the standard deviation and n is the sample size. A lower E provides for a smaller confidence interval (e.g. an interval of lengths and or breadths) in which it is probable that the discharge material falls within. In the present description "E" and "confidence" may be used interchangeably.

After the granulate has exit the processing chamber said discharge granulate may be collected e.g. in a bag. This bag may be in the form of a single dosis form, e.g. for a medicament, or a large scale bag for further distribution.

In another embodiment the discharge granulate may be spheronized. Spheronization may provide for sachet granulates with high loading.

In another embodiment the granulate may be loaded with an ingredient, e.g. a pharmaceutical, and/or be coated before being collected. The pharmaceutical may as previous mentioned be any suitable pharmaceutical, but a preferred pharmaceutical is mesalazine.

The coating may be any coating used in the art both for medical and non-medical purposes. Preferred coatings to be used in context of the present invention are ethyl cellulose or eudragit.

The method of the invention provides a granulate where at least 70%, more preferred at least 80% of the granules have an L/D of less than 4, preferably less than 3 and most preferred less than 2. In a further preferred embodiment the granulate of the invention has a particle size distribution before coating with a confidence of less than or equal to 30, preferably 25 (length/µm) .

The invention will now be illustrated by way of the following examples, which are provided for illustrative purposes only.

### EXAMPLES

### Materials and Methods

The starting granulate is produced according to WO 2004/093884 p. 15 - 16, step 1 - 4.

The flow meter used was a Brooks model No. 1307/A-H-F-2-4-5-G, serial no. 2004112401 with a floater model no. 10-RS-105.

The measuring scale was a K-tron type LWF 05 and a K2-ML-T35/DR.

The "Specific surface" of the granules was measured as described in WO 2004/093884 p. 10.

### Example 1

The results provided in table 1 and figures were obtained with an apparatus as depicted in Fig. 6, 7 and 8.

### Results

Table 1 below provides a summary of experimental results. The specific surface, aspect ratio, confidence and % waste is provided for six different batches, subjected to fluid-bed, milling and sieving, air division according to the present invention, and in some cases subsequent coating.

"Flow" indicates that an air stream was used to divide the granulate according to an aspect of the present invention. The figure is the quantity per time.

The "Aspect ratio" is the longest length, as measured optically, divided by the breadth, as measured by the diameter of the holes in the applied extrusion screen (0.9 mm).

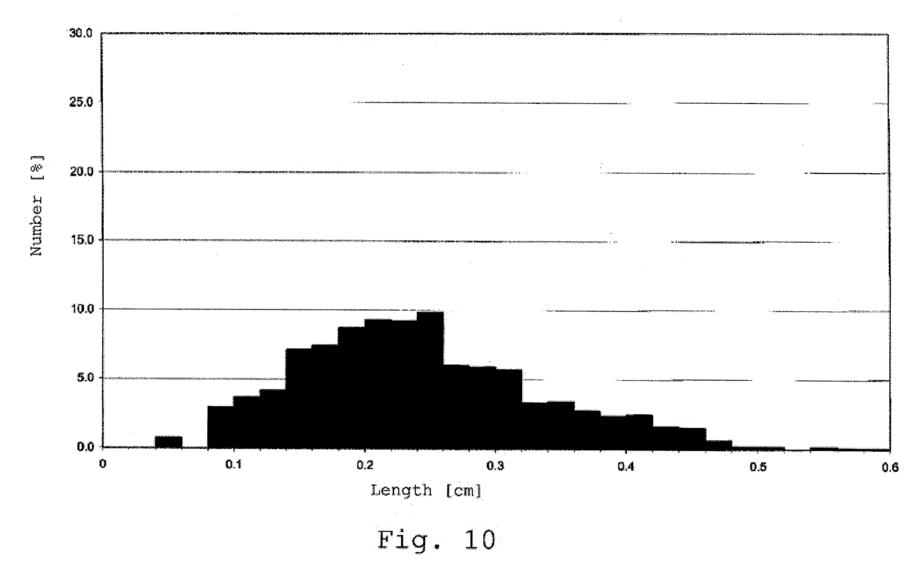

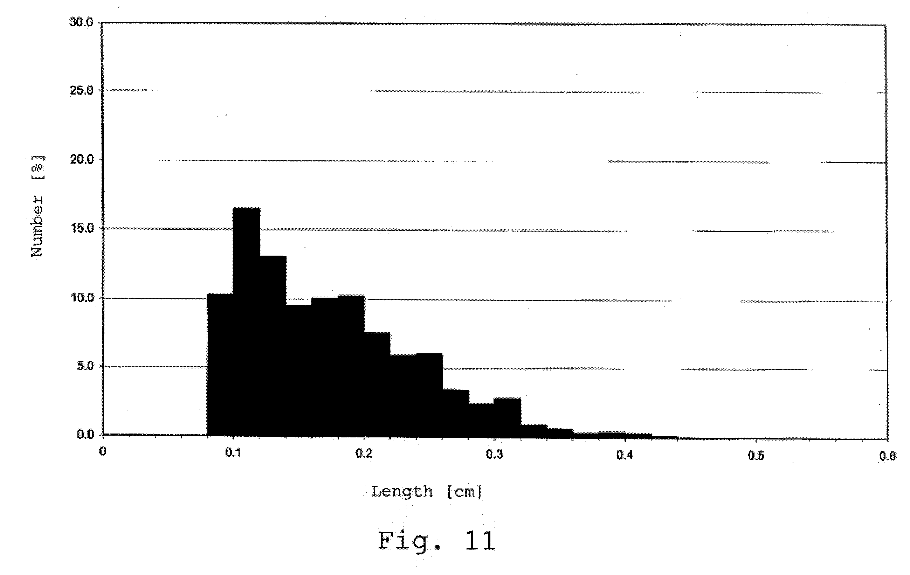

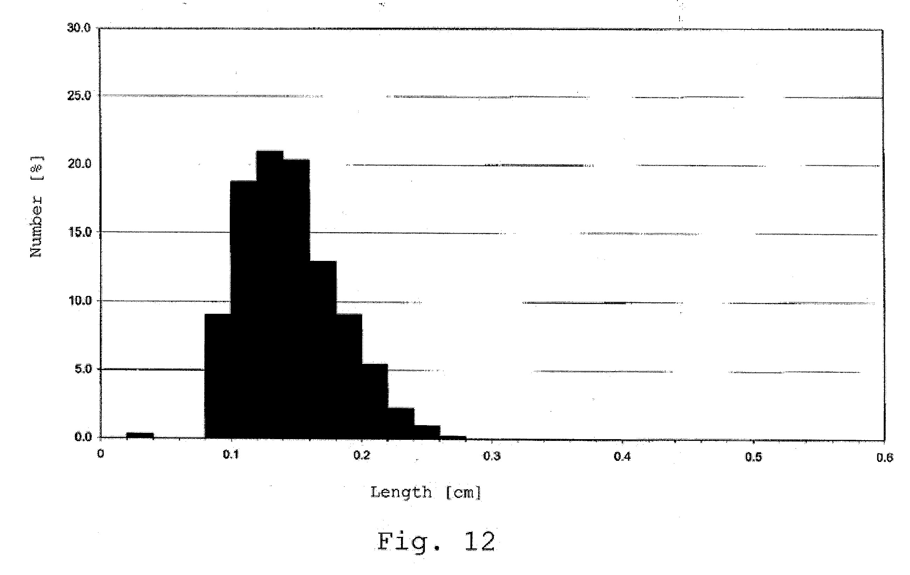

The "Confidence" is the confidence at a significance level of 0.05 of the longest length/µm of granulate, calculated as confidence (E) = 1.96 * (σ/square root(n)), wherein σ is the standard deviation of the longest length and n is the sample size. In general the present invention provides for smaller confidence (narrower confidence interval) than milling and sieving, and thus a more uniform product. This is illustrated in figures 10, 11 and 12 where figure 10 illustrates the size distribution after fluid bed and figure 11 and 12 are the size distribution after fluid bed and milling/sieving or air division according to the invention, respectively. Comparison of the figures 10 and 11 to figure 12 clearly illustrates the superior effect of the method of the invention for obtaining uniform granules.

The "% Waste" is the relative mass of dust resulting from the process, i.e. waste product.

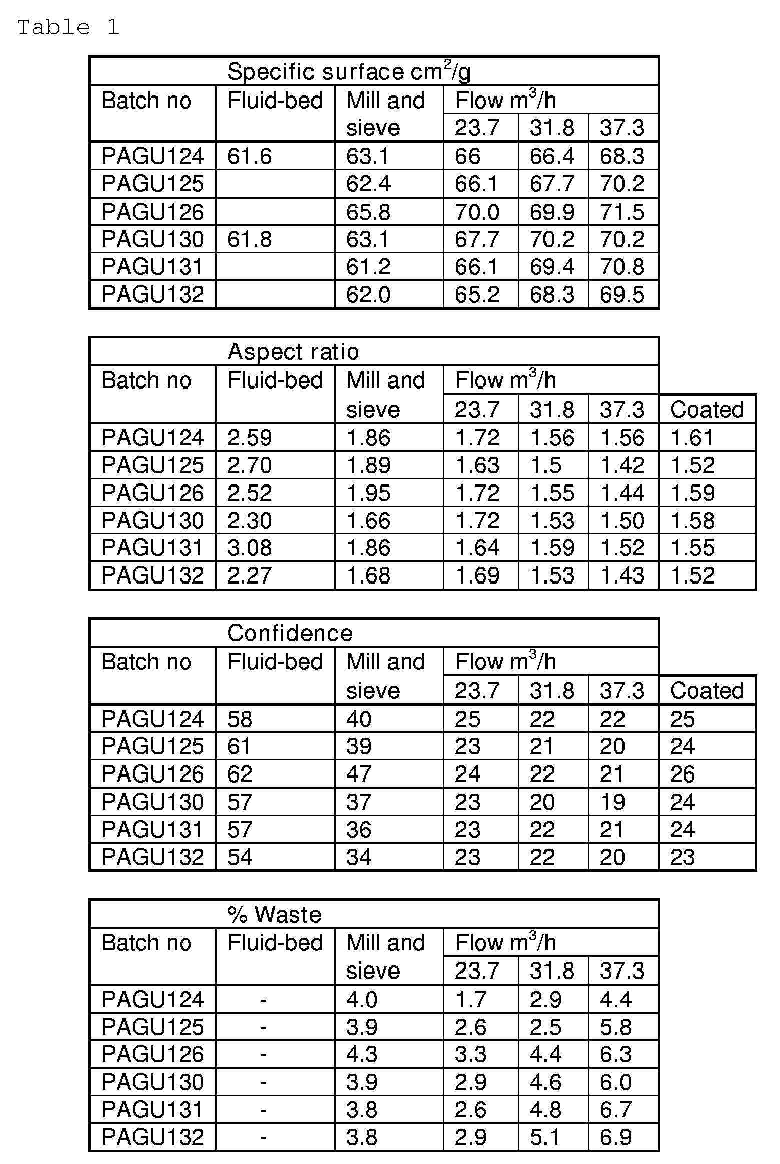

## Claims

1. A method for dividing the granules of a starting granulate resulting in a discharge granulate of granules with reduced mean size, said method comprising the steps of:
(i) feeding said starting granulate into a processing chamber;
(ii) accelerating said starting granulate by means of a fluid flow; and
(iii) decelerating the granules of said starting granulate against at least one impact face.

2. A method according to claim 1, wherein said fluid is air.

3. A method according to claim 1 or 2, wherein the starting granulate is obtained from a fluid-bed.

4. A method according to any of the preceding claims, wherein extrusion is part of the process for providing the starting granulate.

5. A method according to any of the preceding claims, wherein said starting granulate is substantially dry when being fed to the processing chamber.

6. A method according to any one of the preceding claims, wherein the majority of the granules of the starting granulate are rod shaped with an L/D ≥ 4 and a diameter of approximately 0,9 mm or above.

7. A method according to any one of the preceding claims, wherein said starting granulate comprises a pharmaceutically acceptable excipient, such as PVP, and an active pharmaceutical ingredient, such as mesalazine.

8. A method according to any one of the preceding claims, wherein the starting granulate is preprocessed by means of a mill.

9. A method according to any one of the preceding claims, wherein the starting granulate is fed through a weighing means.

10. A method according to any one of the preceding claims, wherein the starting granulate is sieved before being fed to the processing chamber.

11. A method according to any one of the preceding claims, wherein the granulate is fed to the processing chamber by means of gravity.

12. A method according to any one of the preceding claims, wherein in step (ii) the degree of acceleration of said starting granulate is adjustable.

13. A method according to any one of the preceding claims, wherein said fluid is air, and in step (ii) accelerating said starting granulate is performed by means of compressed air, preferably the degree of compression of said compressed air is adjustable.

14. A method according to any one of the preceding claims, wherein the size and/or position and/or angle of said granulate impact faces with respect to the flow direction is/are adjustable.

15. A method according to any one of the preceding claims, wherein the granule of the discharge material has a particle size distribution which is more confined than the particle size distribution of the starting material.

16. A method according to any one of the preceding claims, wherein the discharge granulate is collected in a collecting storage, preferably a bag.

17. A method according to any one of the preceding claims further comprising the step of spheronizing the discharge.

18. A method according to any one of the preceding claims further comprising the step of coating the discharge granulate, preferably with ethyl cellulose or eudragit.

19. A method according to any one of the preceding claims further comprising the step of loading the discharge granulate with an active pharmaceutical ingredient, preferably mesalazine.

20. A granulate obtainable by the method of any one of the previous claims.

21. A granulate made up of essentially circular-cylindrical rod-shaped granules, wherein at least 70% (w/w), more specifically at least 80%, of the granules have an L/D < 4, preferably an L/D < 3 and most preferred an L/D < 2.

22. A granulate according to claim 21, wherein at least 80% (w/w) of the granules have a diameter of 71 mm or less.

23. A non-coated granulate according to any of claims 20-22, wherein the confidence of the granule length/pm is less than or equal to 30, preferably 25.

24. A granulate according to any one of claims 20-23, comprising mesalazine and preferably PVP.

25. A granulate according to any one of claims 20-24, which is coated, preferably with ethyl cellulose or eudragit.

26. An apparatus for dividing the granules of a starting granulate resulting in a discharge granulate of granules with reduced mean size, said apparatus comprising:
an elongated processing chamber with a longitudinal axis;
a fluid acceleration means;
a starting granulate supply means;
a discharge granulate collecting storage; and
a number of granulate impact faces disposed within said processing chamber;
said processing chamber comprising:
a fluid inlet communicating with said fluid acceleration means;
a starting granulate inlet communicating with said starting granulate supply means;
and
a discharge granulate outlet communicating
with said granulate collecting storage;
wherein said fluid inlet is in the form of a tube entering said processing chamber from one end of said chamber, said tube being disposed substantially coaxially within said chamber, the mouth of said tube being disposed between said starting granulate inlet and said discharge granulate outlet seen in the longitudinal direction of the processing chamber.

27. An apparatus according to claim 26, wherein the discharge granulate outlet is disposed at the opposite end with respect to said starting granulate inlet of said processing chamber.

28. An apparatus according to claim 26 or 27, wherein said processing chamber is a substantially circular-cylindrical tube.

29. An apparatus according to any one of claims 26-28, wherein said granulate impact faces are disposed periodically in the longitudinal direction of the processing chamber on the inner circumference of said chamber.

30. An apparatus according to any one of claims 26-29, wherein said granulate impact faces are an integral part of the processing chamber.

31. An apparatus according to any one of claims 26-30, wherein said granulate impact faces are provided by means of a tube of wire mesh or punched plate on the inside of said processing chamber.

32. An apparatus according to any one of claims 26-31, **characterized in that** each granulate impact face is shaped like a hollow frustum of a cone tapered in the flow direction of the granulate, the angle of said tapering with respect to the flow direction preferably being 40-80°, more preferably 50-70°, most preferred approximately 60°.

33. An apparatus according to any one of claims 26-32, wherein said starting granulate inlet comprises a funnel.

34. An apparatus according to any one of claims 26-33, wherein said starting granulate supply means comprises dosing means, preferably in the form of weighing means.

35. An apparatus according to any one of claims 26-34, wherein said discharge granulate collecting storage is a bag.

36. An apparatus according to any one of claims 26-35, wherein said fluid acceleration means comprises a compressed air supply, preferably with means for adjusting the level of air compression.

37. An apparatus according to any one of claims 26-36, further comprising discharge granulate sorting means, preferably a sieve.
